# EUROPÄISCHE PATENTSCHRIFT

(11) **EP 1 041 086 B1**
(45) Veröffentlichungstag und Bekanntmachung des Hinweises auf die Patenterteilung: **18.02.2004**
(21) Anmeldenummer: 00105375.0
(22) Anmeldetag: 20.03.2000
(51) Int. Cl.: C08F 10/00

(54) **Geträgerte Katalysatoren mit einer Donor-Akzeptor-Wechselwirkung**
Supported catalysts with donor-acceptor interaction
Catalyseurs supportes avec interaction doneur-accepteur

(30) Priorität: 01.04.1999 DE 19915108
(43) Veröffentlichungstag der Anmeldung: 04.10.2000
(73) Patentinhaber: BAYER AG, 51368 Leverkusen (DE)
(72) Erfinder: Ostoja-Starzewski, Karl-Heinz Aleksander, Dr. Dr., 61118 Bad Vilbel (DE)

(56) Entgegenhaltungen:
- EP-A- 0 511 665
- EP-A- 0 881 232

## Beschreibung

Die vorliegende Erfindung bezieht sich auf Verbindungen, in denen ein Übergangsmetall mit zwei Liganden-Systemen komplexiert ist und die beiden Systeme durch mindestens eine Brücke aus einem Donor und einem Akzeptor reversibel miteinander verbunden sind.

Die zwischen dem Donoratom und dem Akzeptoratom entstehende koordinative Bindung erzeugt in der Donorgruppe eine positive (Teil)Ladung und in der Akzeptorgruppe eine negative (Teil)Ladung:

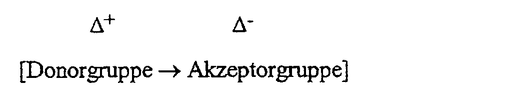

Die Erfindung bezieht sich weiterhin auf die Verwendung dieser geträgerten Katalysatoren mit einer Donor-Akzeptor-Wechselwirkung als Polymerisationskatalysatoren.

Metallocene als π-Komplex-Verbindungen und ihr Einsatz als Katalysatoren bei der Polymerisation von Olefinen sind seit langem bekannt (EP-A-129 368 und die darin zitierte Literatur). Aus EP-A-129 368 ist weiterhin bekannt, daß Metallocene in Kombination mit Aluminiumalkyl/Wasser als Cokatalysatoren wirksame Systeme für die Polymerisation von Ethylen darstellen (so wird beispielsweise aus ca. 1 mol Trimethylaluminium und 1 mol Wasser Methylaluminoxan = MAO gebildet. Auch andere stöchiometrische Verhältnisse wurden schon mit Erfolg angewandt (WO 94/20506)). Es sind auch bereits Metallocene bekannt, deren Cyclopentadienylgerüste miteinander durch eine Brücke kovalent verknüpft sind. Als Beispiel für die zahlreichen Patente und Anmeldungen auf diesem Gebiet sei EP-A 704 461 erwähnt, worin die darin genannte Verknüpfungsgruppe eine (substituierte) Methylengruppe oder Ethylengruppe, eine Silylengruppe, eine substituierte Silylengruppe, eine substituierte Germylengruppe oder eine substituierte Phosphingruppe darstellt. Auch in EP-A 704 461 sind die verbrückten Metallocene als Polymerisationskatalysatoren für Olefine vorgesehen. In EP-A 511 665 und EP-A-881 232 werden solche über substituierte Methylengruppen, Silylengruppen und Germylengruppen verbrückte Metallocene auch auf Tonen als geträgerte Katalysatoren für die Polymerisation beschrieben.

Katalysatoren mit einer Donor-Akzeptor-Wechselwirkung und ihre Verwendung als Polymerisationskatalysatoren sind im Prinzip bekannt.

So beschreibt WO-A-98/01455 Verbindungen, in denen ein Übergangsmetall mit zwei π-Systemen, und zwar insbesondere mit aromatischen π-Systemen (Metallocene) komplexiert ist und die beiden Systeme durch mindestens eine Brücke aus einem Donor und einem Akzeptor reversibel miteinander verbunden sind, wobei die Donor- bzw. Akzeptoratome als Substituenten an den π-Systemen gebunden sind, sowie ihre Verwendung als Polymerisationskatalysatoren.

WO-A-98/01745 beschreibt Verbindungen, in denen ein Übergangsmetall mit zwei π-Systemen, und zwar insbesondere mit aromatischen π-Systemen (Metallocene) komplexiert ist und die beiden Systeme durch mindestens eine Brücke aus einem Donor und einem Akzeptor reversibel miteinander verbunden sind, wobei mindestens eines der Donor- bzw. Akzeptoratome Teil des jeweils zugehörigen π-Systems ist, sowie ihre Verwendung als Polymerisationskatalysatoren.

Die ältere Anmeldung PCT/EP 98/08074 beschreibt Verbindungen, in denen ein Übergangsmetall mit einem π-System und die eine Donor-Akzeptor-Wechselwirkung aufweisen, wobei entweder die Donor- oder die Akzeptorgruppe an des Übergangsmetall gebunden ist, sowie ihre Verwendung als Polymerisationskatalysatoren.

Die Patentanmeldungen WO-A-98/01483 bis WO-A-98/01487, sowie die ältere Anmeldung wo-a-99/32532 beschreiben technische Polymerisationsverfahren unter Einsatz der beschriebenen Katalysatoren mit Donor-Akzeptor-Wechselwirkung.

Es ist aus diesen Dokumenten bekannt, daß die Katalysatoren mit Donor-Akzeptor-Wechselwirkung in geträgerter Form eingesetzt werden können. Überraschend war für den Fachmann jedoch, daß sich besonders vorteilhafte geträgerte Katalysatoren mit Donor-Akzeptor-Wechselwirkung herstellen lassen, wenn man als Trägermaterial spezielle Tone einsetzt.

Gegenstand der Erfindung ist somit eine Zusammensetzung enthaltend
a) eine Übergangsmetallverbindung mit mindestens einer Donor-Akzeptor-Wechselwirkung
b) ein ionentauschendes Trägermaterial mit Schichtgitteraufbau und gegebenenfalls
c) einen oder mehrere Co-Katalysatoren.

Als Komponente a) eignen sich die in den Anmeldungen WO-A-98/01455, WO-A-98/01745, WO-A-98/01483 bis WO-A-98/01487, sowie in den älteren Anmeldungen wo-a-99/33852 und wo-a-99/32532 beschriebenen Übergangsmetallverbindungen mit Donor-Akzeptor-Wechselwirkung.

Insbesondere eignen sich Metallocen-Verbindungen der Formel 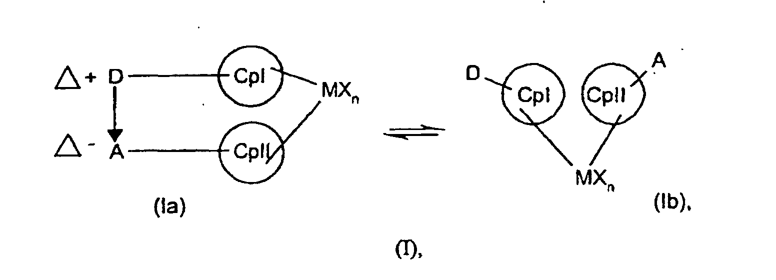 in der CpI und CpII zwei gleiche oder verschiedene Carbanionen mit einer Cyclopentadienylhaltigen Struktur darstellen, in denen eines bis alle H-Atome durch gleiche oder verschiedene Reste aus der Gruppe von linearem oder verzweigtem C₁-C₂₀-Alkyl, das 1-fach bis vollständig durch Halogen, 1-3fach durch Phenyl sowie 1-3fach durch Vinyl substituiert sein kann, C₆-C₁₂-Aryl, Halogenaryl mit 6 bis 12 C-Atomen, Organometall-Substituenten, wie Silyl, Trimethylsilyl, Ferrocenyl sowie 1- oder 2-fach durch D und A substituiert sein können.
- D: ein Donoratom bedeutet, das zusätzlich Substituenten tragen kann und das in seinem jeweiligen Bindungszustand mindestens über ein freies Elektronenpaar verfügt,
- A: ein Akzeptoratom bedeutet, das zusätzlich Substituenten tragen kann und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen,
- M: für ein Übergangsmetall der III., IV., V. oder VI. Nebengruppe des Perioden-systems der Elemente (Mendelejew) einschließlich der Lanthaniden und Actiniden steht,
- X: ein Anionäquivalent bedeutet und
- n: in Abhängigkeit von der Ladung von M die Zahl Null, Eins, Zwei, Drei oder Vier bedeutet.

Das erste und das zweite Carbanion CpI und CpII mit einem Cyclopentadienylgerüst können gleich oder verschieden sein. Das Cyclopentadienylgerüst kann beispielsweise eines aus der Gruppe von Cyclopentadien, substituiertem Cyclopentadien, Inden, substituiertem Inden, Fluoren und substituiertem Fluoren sein. Als Substituenten seien 1 bis 4 je Cyclopentadien-, bzw. ankondensiertem Benzolring genannt. Diese Substituenten können C₁-C₂₀-Alkyl, wie Methyl, Ethyl, Propyl, Isopropyl, Butyl oder isoButyl, Hexyl, Octyl, Decyl, Dodecyl, Hexadecyl, Octadecyl, Eicosyl, C₁-C₂₀-Alkoxy, wie Methoxy, Ethoxy, Propoxy, Isopropoxy, Butoxy oder iso-Butoxy, Hexoxy, Octyloxy, Decyloxy, Dodecyloxy, Hexadecyloxy, Octadecyloxy, Eicosyloxy, Halogen, wie Fluor, Chlor oder Brom, C₆-C₁₂-Aryl, wie Phenyl, C₁-C₄-Alkylphenyl, wie Tolyl, Ethylphenyl, (i-)Propylphenyl, (i-tert.-)Butylphenyl, Xylyl, Halogenphenyl, wie Fluor-, Chlor-, Bromphenyl, Naphthyl oder Biphenylyl, Triorganyl-silyl, wie Trimethylsilyl (TMS), Ferrocenyl sowie D bzw. A, wie oben definiert, sein. Ankondensierte aromatische Ringe können ferner teilweise oder vollständig hydriert sein, so daß lediglich die Doppelbindung bestehen bleibt, an der sowohl der ankondensierte Ring als auch der Cyclopentadienring Anteil haben. Weiterhin können Benzolringe, wie im Inden oder Fluoren, einen oder zwei ankondensierte weitere Benzolringe enthalten. Noch weiterhin können der Cyclopentadien- bzw. Cyclopentadienylring und ein ankondensierter Benzolring gemeinsam einen weiteren Benzolring ankondensiert enthalten. Solche Cyclopentadiengerüste sind in Form ihrer Anionen ausgezeichnete Liganden für Übergangsmetalle, wobei jedes Cyclopentadienyl-Carbanion der genannten, gegebenenfalls substituierten Form eine positive Ladung des Zentralmetalls im Komplex kompensiert. Einzelbeispiele für solche Carbanionen sind: Cyclopentadienyl, Methylcyclopentadienyl, 1,2-Dimethyl-cyclopentadienyl, 1,3-Dimethyl-cyclopentadienyl, Indenyl, Phenylindenyl, 1,2-Diethyl-cyclopentadienyl, Tetramethyl-cyclopentadienyl, Ethyl-cyclopentadienyl, n-Butyl-cyclopentadienyl, n-Octyl-cyclopentadienyl, β-Phenylpropyl-cyclopentadienyl, Tetrahydroindenyl, Propyl-cyclopentadienyl, t-Butylcyclopentadienyl, Benzyl-cyclopentadienyl, Diphenylmethyl-cyclopentadienyl, Trimethylgermyl-cyclopentadienyl, Trimethylstannyl-cyclopentadienyl, Trifluormethylcyclopentadienyl, Trimethylsilyl-cyclopentadienyl, Pentamethylcyclopentadienyl, Fluorenyl, Tetrahydro- bzw. Octahydro-fluorenyl, am Sechsring benzoanellierte Fluorenyle und Indenyle, N,N-Dimethylamino-cyclopentadienyl, Dimethylphosphinocyclopentadienyl, Methoxy-cyclopentadienyl, Dimethylboranyl-cyclopentadienyl, (N,N-Dimethylaminomethyl)-cyclopentadienyl.

Der Index n nimmt in Abhängigkeit von der Ladung von M den Wert Null, Eins, Zwei, Drei oder Vier, bevorzugt Null, Eins oder Zwei an. Die oben genannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen der Metallocen-Verbindung jeweils zwei kompensiert werden. Im Falle von La³⁺ nimmt demnach der Index n den Wert Eins und im Falle von Zr⁴⁺ den Wert Zwei an; bei Sm²⁺ wird n = Null.

Für die Herstellung der Verbindungen (I) verweisen wir auf WO-A-98/01455.

Weiterhin eignen sich insbesondere Metallocen-Verbindungen der Formel (II) 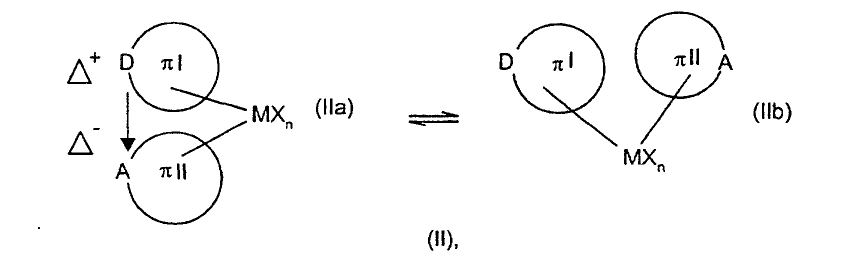 in der
- πI und πII: voneinander verschiedene geladene oder elektrisch neutrale π-Systeme darstellen, die ein- oder zweifach mit ungesättigten oder gesättigten Fünf- oder Sechsringen kondensiert sein können,
- D: ein Donoratom bedeutet, das Substituent von πI oder Teil des π-Systems von πI ist und das in seinem jeweiligen Bindungszustand mindestens über ein freies Elektronenpaar verfügt,
- A: ein Akzeptoratom bedeutet, das Substituent von πII oder Teil des π-Systems von πII ist und das in seinem jeweiligen Bindungszustand eine ElektronenpaarLücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierten Ringsystem eines oder mehrere D oder A oder D und A enthalten kann und
wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem C₁-C₂₀-Alkyl, das 1-fach bis vollständig durch Halogen, 1-3fach durch Phenyl sowie 1-3fach durch Vinyl substituiert sein kann, C₆-C₁₂-Aryl, Halogenaryl mit 6 bis 12 C-Atomen sowie ein- oder zweifach durch D und A substituiert sein können, sodaß die reversible koordinative D→A-Bindung (i) zwischen D und A, die beide Teile des jeweiligen π-Systems oder des ankondensierten Ringsystems sind, oder (ii) von denen D oder A Teil des π-Systems oder des ankondensierten Ringsystems und das jeweils andere Substituent des nicht kondensierten π-Systems oder des ankondensierten Ringsystems ist oder (iii) sowohl D als auch A solche Substituenten sind, wobei im Falle von (iii) mindestens ein zusätzliches D oder A oder beide Teile des π-Systems oder des ankondensierten Ringsystems ist (sind), ausgebildet wird,
- M: für ein Übergangsmetall der III., IV., V. oder VI. Nebengruppe des Perioden-systems der Elemente (Mendelejew) einschließlich der Lanthaniden und Actiniden steht,
- X: ein Anionäquivalent bedeutet und
- n: in Abhängigkeit von den Ladungen von M sowie denen von π-I und π-II die Zahl Null, Eins, Zwei, Drei oder Vier bedeutet.

Erfindungsgemäße π-Systeme sind substituiertes und nicht substituiertes Ethylen, Allyl, Pentadienyl, Benzyl, Butadien, Benzol, das Cyclopentadienylanion und die sich durch Ersatz mindestens eines C-Atoms durch ein Heteroatom ergebenden Spezies. Unter den genannten Spezies sind die cyclischen bevorzugt. Die Art der Koordination solcher Liganden (π-Systeme) zum Metall kann vom σ-Typ oder vom π-Typ sein.

Der Index n nimmt in Abhängigkeit von der Ladung von M den Wert Null, Eins, Zwei, Drei oder Vier, bevorzugt Null, Eins oder Zwei an. Die oben genannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen der Metallocen-Verbindung jeweils zwei kompensiert werden. Im Falle von La³⁺ nimmt demnach der Index n den Wert Eins und im Falle von Zr⁴⁺ den Wert Zwei an; bei Sm²⁺ wird n = Null.

Bei der Ausbildung der Metallocen-Struktur gemäß obiger Formel (I) oder (II) wird je eine positive Ladung des Übergangsmetalls M durch je ein Cyclopentadienyl-haltiges Carbanion kompensiert. Noch verbleibende positive Ladungen am Zentralatom M werden durch weitere, zumeist einwertige Anionen X abgesättigt, von denen zwei gleiche oder verschiedene auch miteinander verknüpft sein können (Dianionen 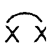 ), beispielsweise einwertig oder zweiwertig negative Reste aus gleichen oder verschiedenen, linearen oder verzweigten, gesättigten oder ungesättigten Kohlenwasserstoffen, Aminen, Phosphinen, Thioalkoholen, Alkoholen oder Phenolen. Einfache Anionen wie CR₃⁻, NR₂⁻, PR₂⁻, OR⁻, SR⁻ usw. können durch gesättigte oder ungesättigte Kohlenwasserstoff- oder Silan-Brücken verbunden sein, wobei Dianionen entstehen und die Anzahl der Brückenatome 0, 1, 2, 3, 4, 5, 6 betragen kann, bevorzugt sind 0 bis 4 Brückenatome, besonders bevorzugt 1 oder 2 Brückenatome. Die Brückenatome können außer H-Atomen noch weitere KW-Substituenten R tragen. Beispiele für Brücken zwischen den einfachen Anionen sind etwa -CH₂-, -CH₂-CH₂-, -(CH₂)₃-, CH=CH, -(CH=CH)₂-, -CH=CH-CH₂-, CH₂-CH=CH-CH₂-, -Si(CH₃)₂-, C(CH₃)₂-. Beispiele für X sind: Hydrid, Chlorid, Methyl, Ethyl, Phenyl, Fluorid, Bromid, Iodid, der n-Propylrest, der i-Propylrest, der n-Butylrest, der Amylrest, der i-Amylrest, der Hexylrest, der i-Butylrest, der Heptylrest, der Octylrest, der Nonylrest, der Decylrest, der Cetylrest, Methoxy, Ethoxy, Propoxy, Butoxy, Phenoxy, Dimethylamino, Diethylamino, Methylethylamino, Di-t-Butylamino, Diphenylamino, Diphenylphosphino, Dicyclohexylphosphino, Dimethylphosphino, Methyliden, Ethyliden, Propyliden, das Ethylenglykoldianion. Beispiele für Dianionen sind 1,4-Diphenyl-1,3-butadiendiyl, 3-Methyl-1,3-pentadiendiyl, 1,4-Dibenzyl-1,3-butadiendiyl, 2,4-Hexadiendiyl, 1,3-Pentadiendiyl, 1,4-Ditolyl-1,3-butadiendiyl, 1,4-Bis(trimethylsilyl)-1,3-butadiendiyl, 1,3-Butadiendiyl. Besonders bevorzugt sind 1,4-Diphenyl-1,3-butadiendiyl, 3-Methyl-1,3-pentadiendiyl, 1,4-Dibenzyl-1,3-butadiendiyl, 2,4-Hexadiendiyl, 3-Methyl-1,3-pentadiendiyl, 1,4-Ditolyl-1,3-butadiendiyl und 1,4-Bis(trimethylsilyl)-1,3-butadiendiyl. Weitere Beispiele für Dianionen sind solche mit Heteroatomen, etwa der Struktur 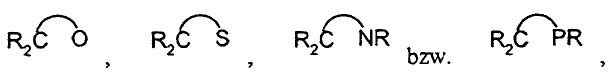 wobei die Brücke die angegebene Bedeutung hat. Besonders bevorzugt sind darüberhinaus zur Ladungskompensation schwach oder nicht koordinierende Anionen der oben genannten Art.

Die Verbindungen der allgemeinen Formel (II) können gemäß WO-A-98/01745 hergestellt werden.

Weiterhin eignen sich insbesondere π-Komplex-Verbindungen von Übergangsmetallen der Formeln 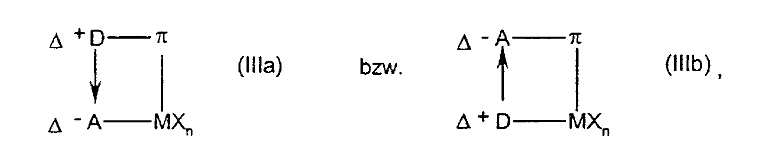 worin
- π: ein geladenes oder elektrisch neutrales π-System darstellt, das ein- oder zweifach mit ungesättigten oder gesättigten Fünf- oder Sechsringen kondensiert sein kann und dessen H-Atome in der kondensierten oder nicht-kondensierten Form teilweise oder vollständig durch gleiche oder verschiedene Reste aus der Gruppe von nicht verzweigten oder verzweigtem C₁-C₂₀-(Cyclo)Alkyl, C₁-C₂₀-Halogen(cyclo)alkyl, C₂-C₂₀-(Cyclo)Alkenyl, C₁-C₂₀-(Cyclo)Alkoxy, C₇-C₁₅-Aralkyl, C₆-C₁₂-Aryl oder ein- oder zweifach durch D oder A ersetzt sein können,
- D: ein Donoratom bedeutet, das im Falle der Teilstruktur (IIIa) Substituent oder Teil des π-Systems ist oder über einen Spacer mit dem π-System verbunden ist und im Falle der Teilstruktur (IIIb) an das Übergangsmetall gebunden ist,
- A: ein Akzeptoratom bedeutet, das im Falle der Teilstruktur (IIIa) an das Übergangsmetall gebunden ist und im Falle der Teilstruktur (IIIb) Substituent oder Teil des π-Systems ist oder über einen Spacer mit dem π-System verbunden ist,
wobei die Anbindung von D bzw. A an das Übergangsmetall entweder direkt oder über einen Spacer erfolgt, wobei D und A über eine koordinative Bindung derart verknüpft sind, daß das Donoratom eine positive (Teil)Ladung und das Akzeptoratom eine negative (Teil)Ladung annehmen und wobei D und A ihrerseits Substituenten tragen können,
- M: für ein Übergangsmetall der III. bis VIII. Nebengruppe des Periodensystems der Elemente (Mendelejew) einschließlich der Lanthaniden und der Actiniden, bevorzugt der III. bis VI. Nebengruppe einschließlich der Lanthaniden und Ni, steht,
- X: ein Anionenäquivalent bedeutet und
- n: in Abhängigkeit von den Ladungen von M und von π die Zahl Null, Eins, Zwei, Drei oder Vier bedeutet
und wobei D und A im einzelnen wie folgt definiert sind:
i) im Rahmen der Formel (IIIa) bedeuten
   - D: über einen Spacer oder direkt an π gebundenen zweifach substituierten N, P, As, Sb der Bi oder einfach oder zweifach substituierten O, S, Se oder Te und
   - A: über einen Spacer oder direkt an M gebundenes B, Al, Ga oder In; oder
ii) im Rahmen der Formel (IIIa) bedeuten D und A gemeinsam eine der über Spacer oder direkt an π bzw. M gebundenen Gruppen 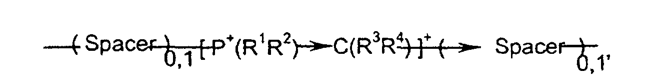 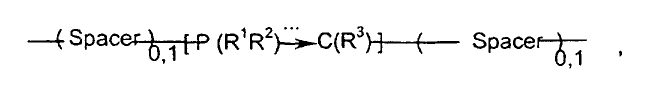 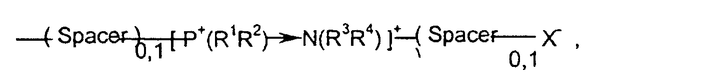 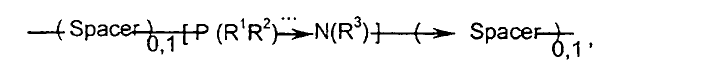 oder 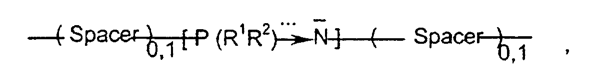 die Phosphoniumsalze, Phosphorylide, Aminophosphoniumsalze und Phosphinimine darstellen,
   oder die entsprechenden Ammoniumsalze und Stickstoffylide, Arsoniumsalze und Arsenylide, Sulfoniumsalze und Schwefelylide, Seleniumsalze und Selenylide, die entsprechenden Aminoarsoniumsalze und Arsinimine, Aminosulfoniumsalze und Sulfimine, Aminoseleniumsalze und Selenimine, 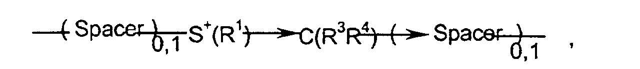 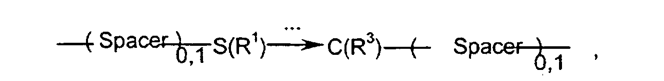 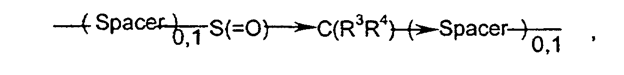 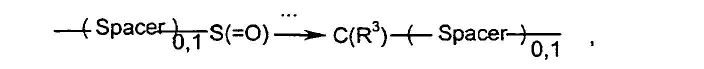 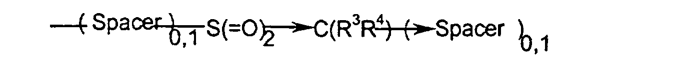 und die entsprechenden Sulfiminstrukturen; oder
iii) im Rahmen der Formel (IIIb) bedeuten
   - D: über einen Spacer oder direkt an M gebundenen zweifach substituierten N, P, As, Sb oder Bi oder einfach oder zweifach substituierten O, S, Se oder Te und
   - A: über einen Spacer oder direkt an π gebundenes zweifach substituiertes Al, Ga oder In oder über einen Spacer an π gebundenes zweifach substituiertes B
   wobei R¹, R², R³ oder R⁴ und der Begriff "substituiert" unabhängig voneinander C₁-C₂₀-(Cyclo)-alkyl, C₁-C₂₀-Halogen-(cyclo)alkyl, C₂-C₂₀-(Cyclo)alkenyl, C₇-C₁₅-Aralkyl, C₆-C₁₂-Aryl, C₁-C₂₀-(Cyclo)alkoxy, C₇-C₁₅-Aralkoxy, C₆-C₁₂-Aryloxy, Indenyl, Halogen, 1-Thienyl, disubstituiertes Amino, trisubstituiertes Silyl, das über -CH₂-angebunden sein kann, oder Phenyl-acetylenyl bedeuten und "Spacer" eine zweibindige Silyl-, Germanyl-, Amino-, Phosphino-, Methylen-, Ethylen-, Propylen-, Disilylethylen- oder Disiloxangruppe bedeutet, die 1- bis 4fach durch C₁-C₄-Alkyl, Phenyl oder C₄-C₆-Cycloalkyl substituiert sein kann, und das Element P, N, As, S bzw. Se über den Spacer oder direkt an π gebunden ist; und wobei in dem Fall, daß D Teil des π-Systems ist, zwischen A und M ein Spacer angeordnet ist und wobei in den Fällen i) und ii) als Spacer auch -C(R¹)= auftritt.

Der Index n nimmt in Abhängigkeit von der Ladung von M den Wert Null, Eins, Zwei, Drei oder Vier, bevorzugt Null, Eins oder Zwei an. Die oben genannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen der Metallocen-Verbindung jeweils zwei kompensiert werden. Im Falle von La³⁺ nimmt demnach der Index n den Wert Eins und im Falle von Zr⁴⁺ den Wert Zwei an; bei Sm²⁺ wird n = Null.

Wichtige Strukturen, die unter die Formeln (IIIa) und (IIIb) fallen, sind folgende, die lediglich beispielhaft und nicht erschöpfend aufgeführt sind:

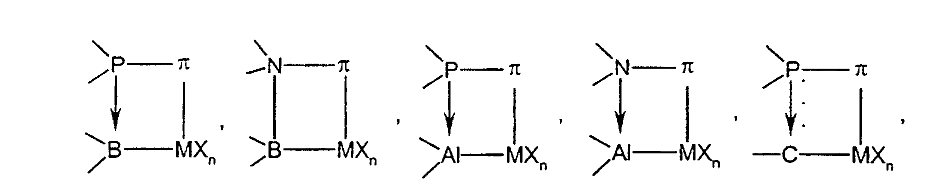

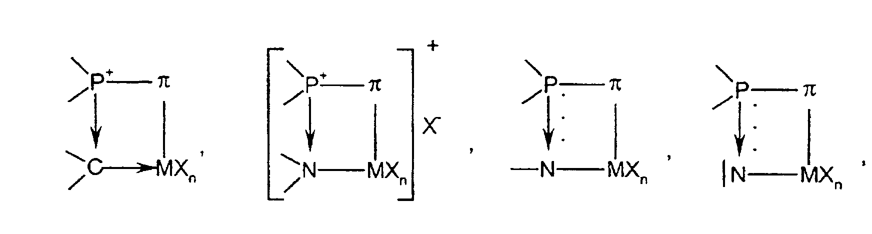

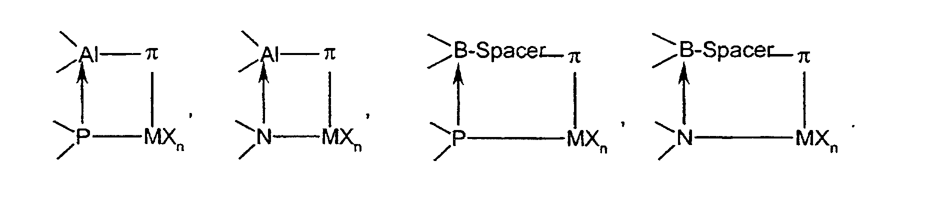

Bevorzugte Strukturen sind solche ohne Spacer mit Ausnahme von Strukturen, in denen D Teil des π-Systems ist, die stets einen Spacer zwischen A und M enthalten. Bevorzugt sind weiter Strukturen der Teilformel (IIIa).

Die erfindungsgemäßen π-Komplex-Verbindungen von Übergangsmetallen der oben dargestellten Art (IIIa bzw. IIIb) im Rahmen von i) bzw. iii) können beispielsweise in fachmännisch bekannter Weise so hergestellt werden, daß man im Falle der Teilstruktur der Formel (IIIa) entweder je eine Verbindung der Formeln (IV) und (V) 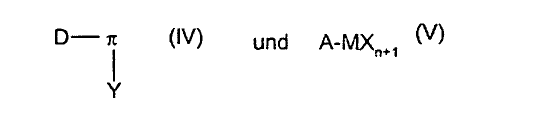 unter Austritt der Verbindung YX (VI)
oder je eine Verbindung der Formeln (VII) und (VIII) 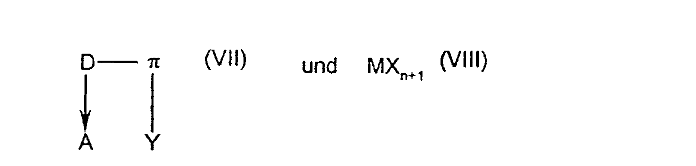 unter Austritt der Verbindung YX (VI))
oder je eine Verbindung der Formeln (IX) und (X) 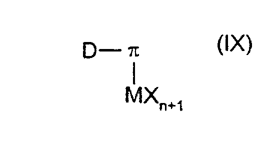 und AY (X)
unter Austritt der Verbindung YX (VI)
und im Falle der Teilstruktur der Formel (IIIb)
entweder je eine Verbindung der Formeln (XI) und (XII) 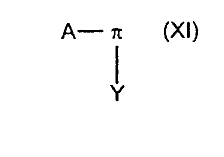 und D-MXₙ₊₁ (XII)
unter Austritt der Verbindung YX (VI)
oder je eine Verbindung der Formeln (XIII) und (XIV) 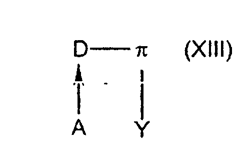 und MXₙ₊₁ (XIV)
unter Austritt der Verbindung YX (VI)
oder je eine Verbindung der Formeln (XV) und (XVI) 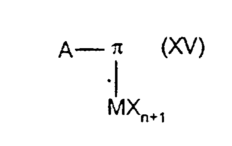 und DY (XVI) unter Austritt der Verbindung YX (VI)
in Gegenwart oder in Abwesenheit eines aprotischen Lösungsmittels miteinander umsetzt, wobei
π, D, A, M, X und n die oben angegebene Bedeutung haben und
- Y: für Si(R¹R²R³), Ge(R¹R²R³) oder Sn(R¹R²R³) steht, worin R¹, R² und R3 unabhängig voneinander geradkettiges oder verzweigtes C₁-C₂₀-(Cyclo)Alkyl, C₁-C₂₀-Halogen(cyclo)alkyl, C₂-C₂₀-(Cyclo)Alkenyl, C₇-C₁₅-Aralkyl, C₆-C₁₂-Aryl, Vinyl, Allyl oder Halogen bedeuten, und wobei Y für den Fall, daß π eine negative Ladung trägt, auch ein Kationenäquivalent eines (Erd)Alkalimetalls oder des Thalliums sein kann und wobei Y auch Wasserstoff sein kann, wenn X ein Amidanion vom Typ R₂N⁻, ein Carbanion vom Typ R₃C⁻ oder ein Alkoholatanion vom Typ RO- ist.

Die Herstellung von π-Komplex-Verbindungen im Rahmen von ii) von Formel (IIIa) mit den darin enthaltenen Oniumsalzen, Yliden, Amino-oniumsalzen und Iminen erfolgt gleichfalls in fachmannisch bekannter Weise (A.W. Johnson, W.C. Kaska, K.A. Ostoja Starzewski, D.A. Dixon, Ylides and Imines of Phosphorus, John Wiley and Sons, Inc., New York 1993): Phosphoniumsalze lassen sich durch Quaternierung von Phosphinen mit Organylhalogeniden erhalten. Dehydrohalogenierung mit Basen führt bei einer ca. 1:1-Stöchiometrie zu Phosphoryliden. Umsetzung mit weiteren Äquivalenten Base (z.B. Butyl-Lithium) ergibt unter Butan-Freisetzung das Ylid-Anion

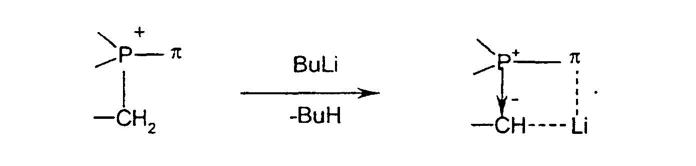

Die Weiterreaktion mit MXₙ führt unter Abspaltung von LiX zu dem erfindungsgemäßen D-A-Halbsandwichkomplex

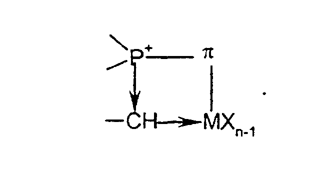

Ein weiteres Äquivalent Base liefert unter Dehydrohalogenierung schließlich

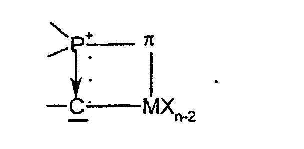

Zur Herstellung der isoelektronischen (P → N)-Derivate kann man in analoger Weise von den Aminophosphoniumsalzen ausgehen oder man geht von einem Donor-substituierten Halbsandwich-Komplex aus wie z.B. 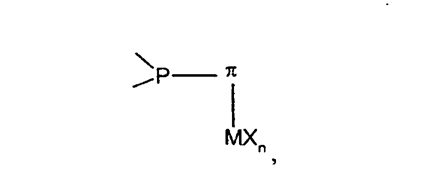 welches mit Organylamin und Tetrachlorkohlenstoff 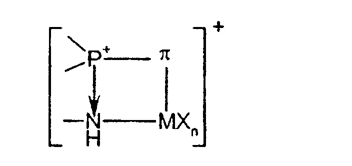 ergibt. Anschließende Deprotonierung ergibt im ersten Schritt 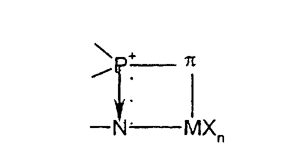 (welches auch aus dem P-substituierten Halbsandwichkomplex durch Umsetzung mit Organylaziden oder Triorganylsilylaziden mit anschließender N₂-Abspaltung entsteht) und mit weiterer Base und für den Fall, daß der Stickstoff ein H-Atom trägt,

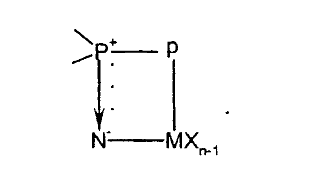

Neben der obligatorisch vorhandenen ersten Donor-Akzeptor-Bindung zwischen D und A in den Formeln (I), (II) und (III) können weitere Donor-Akzeptor-Bindungen gebildet werden, wenn zusätzliche D und/oder A als Substituenten der jeweiligen Cyclopentadiensysteme vorliegen. Alle Donor-Akzeptor-Bindungen sind durch ihre oben dargestellte Reversibilität gekennzeichnet. Für den Fall mehrerer D bzw. A können diese verschiedene der genannten Positionen einnehmen. Die Erfindung umfaßt demnach sowohl die verbrückten Molekül-Zustände als auch die unverbrückten Zustände. Die Anzahl der D-Gruppen kann gleich oder verschieden zur Anzahl der A-Gruppen sein. In bevorzugter Weise werden die Liganden, insbesondere CpI und CpII über nur eine Donor-Akzeptor-Brücke verknüpft.

Neben den erfindungsgemäßen D/A-Brücken können in den Formeln (I), (II) und (III) auch kovalente Brücken vorliegen. In diesem Falle verstärken die D/A-Brücken die Stereorigidität und die Thermostabilität des Katalysators. Beim Wechsel zwischen geschlossener und geöffneter D/A-Bindung werden Sequenzpolymere mit höherer und niedrigerer Stereoregularität zugänglich. Solche Sequenzen können bei Copolymeren unterschiedliche chemische Zusammensetzungen haben.

Als Donorgruppen kommen in den Formeln (I), (II) und (III) vor allem solche in Frage, bei denen das Donoratom D ein Element der 5., 6. oder 7. Hauptgruppe des Periodensystems der Elemente (Mendelejew) ist und mindestens ein freies Elektronenpaar besitzt und wobei sich das Donoratom im Falle von Elementen der 5. Hauptgruppe in einem Bindungszustand mit Substituenten befindet und im Falle von Elementen der 6. Hauptgruppe in einem solchen befinden kann; Donoratome der 7. Hauptgruppe tragen keine Substituenten. Dies wird am Beispiel von Phosphor P, Sauerstoff O und Chlor Cl als Donoratome wie folgt verdeutlicht, wobei "Subst." solche genannten Substituenten und "-Cp" die Bindung an das Cyclopentadienylhaltige Carbanion darstellen, ein Strich mit einem Pfeil, die in Formel (I) oder (II) angegebene Bedeutung einer koordinativen Bindung hat und sonstige Striche vorhandene Elektronenpaare bedeuten:

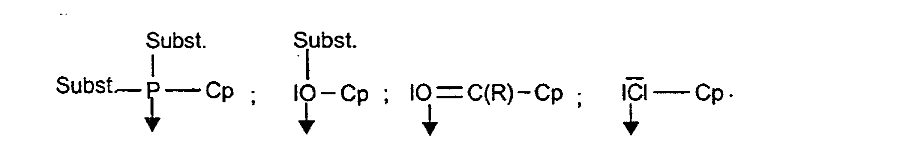

Als Akzeptorgruppen kommen in den Formeln (I), (II) und (III) vor allem solche in Frage, deren Akzeptoratom A ein Element aus der 3. Hauptgruppe des Periodensystems der Elemente (Mendelejew), wie Bor, Aluminium, Gallium, Indium und Thallium ist, sich in einem Bindungszustand mit Substituenten befindet und eine Elektronenlücke besitzt.

Andererseits umfaßt das Akzeptoratom Elemente anderer Hauptgruppen des Periodensystems der Elemente, die in ihrem Bindungszustand eine als Akzeptor wirkende Gruppe bilden, ausgewählt aus den Gruppen Nitren, Carben, Carbin.

D und A sind durch eine koordinative Bindung, die auch als dative Bindung bezeichnet wird, verknüpft, wobei D eine positive (Teil)Ladung und A eine negative (Teil)Ladung annehmen.

Es wird demnach zwischen dem Donoratom D und der Donorgruppe bzw. zwischen dem Akzeptoratom A und der Akzeptorgruppe unterschieden. Die koordinative Bindung D → A wird zwischen dem Donoratom D und dem Akzeptoratom A hergestellt. Die Donorgruppe bedeutet die Einheit aus dem Donoratom D, den gegebenenfalls vorhandenen Substituenten und den vorhandenen Elektronenpaaren; entsprechend bedeutet die Akzeptorgruppe die Einheit aus dem Akzeptoratom A, den Substituenten und der vorhandenen Elektronenlücke.

Substituenten an den Donoratomen N, P, As, Sb, Bi, O, S, Se bzw. Te und an den Akzeptoratomen B, Al, Ga, In bzw. Tl sind beispielsweise: C₁-C₁₂(Cyclo)Alkyl, wie Methyl, Ethyl, Propyl, i-Propyl, Cyclopropyl, Butyl, i-Butyl, tert.-Butyl, Cyclobutyl, Pentyl, Neopentyl, Cyclopentyl, Hexyl, Cyclohexyl, die isomeren Heptyle, Octyle, Nonyle, Decyle, Undecyle, Dodecyle; die hierzu korrespondierenden C₁-C₁₂-Alkoxy-Gruppen; Vinyl, Butenyl, Allyl; C₆-C₁₂-Aryl, wie Phenyl, Naphthyl oder Biphenylyl, Benzyl, die durch Halogen, 1 oder 2 C₁-C₄-Alkylgruppen, C₁-C₄-Alkoxygruppen, Sulfonat, Nitro oder Halogenalkylgruppen, C₁-C₆-Alkyl-carboxy, C₁-C₆-Alkylcarbonyl oder Cyano substituiert sein können (z.B. Perfluorphenyl, m,m'-Bis(trifluormethyl)-phenyl, Tri(C₁-C₂₀-alkyl)silyl, Tri(C₆-C₁₂-aryl)silyl und analoge, dem Fachmann geläufige Substituenten); analoge Aryloxygruppen; Indenyl; Halogen, wie F, Cl, Br und I, 1-Thienyl, disubstituiertes Amino, wie (C₁-C₁₂-Alkyl)₂amino, Diphenylamino, Tris-(C₁-C₁₂ -alkyl)-silyl, NaSO₃-Aryl, wie NaSO₃-Phenyl und NaSO₃-Tolyl, C₆H₅-C=C-; aliphatisches und aromatisches C₁-C₂₀-Silyl, dessen Alkylsubstituenten neben den oben genannten zusätzlich Octyl, Decyl, Dodecyl, Stearyl oder Eicosyl sein können und dessen Arylsubstituenten Phenyl, Tolyl, Xylyl, Naphthyl oder Biphenylyl sein können; und solche substituierten Silylgruppen, die über -CH₂- an das Donoratom bzw. das Akzeptoratom gebunden sind, beispielsweise (CH₃)₃SiCH₂-, (C₁-C₁₂-Alkyl)(phenyl)amino, (C₁-C₁₂-Alkyl-naphthyl)-amino, (C₁-C₁₂-Alkylphenyl)₂-amino, C₆-C₁₂-Aryloxy mit den oben genannten Arylgruppen, C₁-C₈-Perfluoralkyl, Perfluorphenyl. Bevorzugte Substituenten sind: C₁-C₆-Alkyl, C₅-C₆-Cycloalkyl, Phenyl, Tolyl, C₁-C₆-Alkoxy, C₆-C₁₂-Aryloxy, Vinyl, Allyl, Benzyl, Perfluorphenyl, F, Cl, Br, Di-(C₁-C₆-alkyl)-amino, Diphenylamino.

Donorgruppen sind solche, bei denen das freie Elektronenpaar am N, P, As, Sb, Bi, O, S, Se, Te, F, Cl, Br, I lokalisiert ist; bevorzugt hiervon sind N, P, O, S. Beispielhaft als Donorgruppen seien genannt:
(CH₃)₂N-, (C₂H₅)₂N-, (C₃H₇)₂N-, (C₄H₉)₂N-, (C₆-H₅)₂N-, (CH₃)₂P-, (C₂H₅)₂P-, (C₃H₇)₂P-, (i-C₃H₇)₂P-, (C₄H₉)₂P-, (t-C₄H₉)P-, (Cyclohexyl)₂P-, (C₆H₅)₂P-, (CH₃)(C₆H₅)P-, (CH₃O)₂P-, (C₂H₅O)₂P-, (C₆H₅O)₂P-, (CH₃-C₆H₄O)₂P-, ((CH₃)₂N)₂P-, Methyl enthaltende Phosphinogruppen, CH₃O-, CH₃S-, C₆H₅S-, -C(C₆H₅)=O, -C(CH₃)=O, -OSi(CH₃)₃, -OSi(CH₃)₂-t-butyl, in denen N und P je ein freies Elektronpaar und O und S je zwei freie Elektronenpaare tragen und wobei in den beiden zuletzt genannten Beispielen der doppelt gebundene Sauerstoff über eine Spacergruppe gebunden ist, sowie Systeme, wie der Pyrrolidonring, wobei die von N verschiedenen Ringglieder ebenfalls als Spacer wirken.

Akzeptorgruppen sind solche, bei denen eine Elektronenpaar-Lücke am B, Al, Ga, In oder Tl, bevorzugt B, Al oder Ga vorhanden ist; beispielhaft seien genannt: (CH₃)₂B-, (C₂H₅)₂B-, H₂B-, (C₆H₅)₂B-, (CH₃)(C₆H₅)B-, (Vinyl)₂B-, (Benzyl)₂B-, Cl₂B-, (CH₃O)₂B-, Cl₂Al-, (CH₃)₂Al-, (i-C₄H₉)₂Al-, (Cl)(C₂H₅)Al-, (CH₃)₂Ga-, (C₃H₇)₂Ga-, ((CH₃)₃Si-CH₂)₂Ga-, (Vinyl)₂Ga-, (C₆H₅)₂Ga-, (CH₃)₂In-, ((CH₃)₃Si-CH₂)₂In-, (Cyclopentadienyl)₂In-.

Weiterhin kommen solche Donor- und Akzeptorgruppen in Frage, die chirale Zentren enthalten oder in denen 2 Substituenten mit dem D- bzw. A-Atom einen Ring bilden.

Wir verweisen an dieser Stelle ausdrücklich auf die Anmeldungen WO-A-98/01 455, WO-A-98/01 745, WO-A-98/01 483 bis WO-A-98/01 487, sowie auf die älteren Anmeldungen PCT/EP 98/08 074 und PCT/EP 98/08 012.

Als Komponente b) eigenen sich sämtliche dem Fachmann bekannte ionentauschende Trägermaterialien mit Schichtgitteraufbau. Ionentauschende Trägermaterialien mit Schichtgitteraufbau sind Materialien in denen die einzelnen, z.B. durch ionische Bindungen aufgebauten Schichten parallel zueinander gestapelt sind, wobei zwischen den Schichten schwache Wechselwirkungen herrschen und eventuell eingelagerte Ionen austauschbar sind. Diese ionentauschende Trägermaterialien mit Schichtgitteraufbau können sowohl künstlich hergestellt sein, als auch in der Natur vorkommen.

Die Schichtgitter können hierbei unter anderem hexagonal-dichtest gepackt sein oder auch dem Antimon-, CdCl₂- oder CdI₂-Gitter entsprechend gepackt sein.

Beispiele für ionentauschende Trägermaterialien mit Schichtgitteraufbau sind Kaolin, Bentonit, Kibushi Ton, Gairome Ton, Allophan, Hisingerit, Pyrophyllit, Talkum, Vermiculit, Palygorskit, Kaolinit, Nacrit, Dickit, Halloysit und Montmorillonite. Besonders bevorzugt sind Montmorillonite.

Die Oberflächen nach der BET-Methode der ionenaustauschenden Trägermaterialien mit Schichtgitteraufbau liegen üblicherweise im Bereich von 20 bis 800 m²/g, bevorzugt 30 bis 150 m²/g, besonders bevorzugt 40 bis 100 m²/g. Diese wird gemessen nach Brunauer, Emmet und Teller, J. Anorg. Chem. Soc. 60(2), 309 (1938).

Bevorzugt wird die Komponente b) vor ihrem Einsatz chemisch behandelt. Als chemische Behandlungen werden beispielsweise genannt, Oberflächenbehandlung, um Verunreinigungen zu entfernen, die die Polymerisation nachteilig beeinflussen, oder Oberflächenbehandlungen, um die Kristallstruktur zu beeinflussen. Insbesondere sei die Behandlung mit Brönsted-Säuren oder Alkali, mit Salzen und/oder organischen Verbindungen genannt. Die Behandlung mit Brönsted-Säuren kann hierbei nicht nur der Entfernung von Verunreinigungen dienen, sondern auch zur Entfernung von enthaltenen unerwünschten Kationen, wie Aluminium-, Eisenund/oder Magnesiumkationen, aus dem Schichtgitter und damit zur Erhöhung der Oberfläche dienen. Durch die Behandlung mit Alkali wird im allgemeinen die Kristallstruktur von b) zerstört oder nachhaltig verändert. Dies kann in Einzelfällen zu einer Aktivitätssteigerung des Katalysatorsystems führen.

Die zwischen den Schichtgittern gegebenfalls enthaltenen Metallionen können durch andere Ionen, bevorzugt sterisch anspruchsvolle Ionen ausgetauscht werden. Weiterhin können anorganische oder auch organische Substanzen zwischen die einzelnen Schichten interkalieren, d. h. sich zwischen die Schichten einlagern. Beispiele solcher Substanzen sind Salze wie TiCl₄ oder ZrCl₄, Metallalkoholate, wie Ti(OR)₄, Zr(OR)₄, PO(OR)₃ und B(OR)₃, wobei die Reste R unabhängig ausgewählt werden aus Alkyl, Aryl oder Aralkyl. Weiterhin seinen Metallhydroxid-Ionen, wie [Al₁₃O₄(OH)₂₄] ⁷⁺, [Zr₄(OH)₁₄]²⁺ und [Fe₃O(OCOCH₃)₆]⁺ oder kolloidale anorganische Verbindungen, wie SiO₂ als Beispiele genannt. Diese Substanzen können selbstverständlich auch in Gemischen eingesetzt werden. Als Beispiel für andere Ionen seinen die Oxide genannt, die aus den genannten Metallhydroxid-Ionen durch thermische Wasserabspaltung hergestellt werden können. Weiterhin seinen Polymere genannt, die durch Hydrolyse von Metallalkoholaten, wie Si(OR)₄, Al(OR)₃, oder Ge(OR)₄ herstellbar sind.

Komponente b) kann ohne Vorbehandlung eingesetzt werden, oder nach Zugabe von Wasser oder, besonders bevorzugt, nach thermischer Vorbehandlung. Vorzugsweise findet die thermische Vorbehandlung im Schutzgasstrom bei Temperaturen im Bereich von 500 bis 800°C, insbesondere 100 - 400°C statt.

Selbstverständlich können auch Gemische aus mehreren verschiedenen Komponenten b) verwendet werden.

Ganz besonders bevorzugt als Komponente b) sind Montmorillonite.

Die Herstellung der erfindungsgemäßen geträgerten Katalysatoren mit einer Donor-Akzeptor Wechselwirkung (Trägerung) erfolgt auf dem Fachmann geläufige Weise. Ein Beispiel hierfür ist die Umsetzung eines Übergangsmetallhalogenids mit einem silylierten Donorliganden unter Austritt von Silylhalogenid zum Donor-Halbsandwich-Komplex und Weiterreaktion des Donor-Halbsandwich-Komplexes mit einem silylierten Akzeptorliganden zum Donor-Akzeptor-Metallocen unter erneutem Austritt von Silylhalogenid.

Die erfindungsgemäßen geträgerten Katalysatoren mit einer Donor-Akzeptor Wechselwirkung eignen sich hervorragend als Katalysatoren in Verfahren zur Homo- und Copolymerisation von einem oder mehreren C₂-C₄₀-Olefinen oder zur Copolymerisation von einem oder mehreren C₂-C₄₀-Olefinen mit einem oder mehreren C₄-C₈-Isolefinen, C₂-C₈-Alkinen oder C₄-C₈-Diolefinen in der Gas-, Lösungs-, Masse-, Hochdruck- oder Slurry-Phase bei -60 bis +250°C und 0,5 bis 5.000 bar Druck, wobei in Gegenwart oder Abwesenheit von linearen und verzweigten gesättigten oder aromatischen oder Alkyl-substituierten aromatischen C₄-C₂₀-Kohlenwasserstoffen oder von gesättigten oder aromatischen C₂-C₁₀-Halogenkohlenwasserstoffen gearbeitet werden kann. Solche Polymerisationen können in einem oder mehreren Reaktoren diskontinuierlich oder bevorzugt kontinuierlich durchgeführt werden. Im Falle mehrerer Reaktoren oder Reaktionszonen kann unter verschiedenen Polymerisationsbedingungen gearbeitet werden. Pro Mol Metallocen-Verbindungen werden 10¹ bis 10¹² Mol (Co)Monomere umgesetzt.

Die erfindungsgemäßen geträgerten Katalysatoren mit einer Donor-Akzeptor Wechselwirkung werden gegebenfalls zusammen mit Cokatalysatoren c) eingesetzt. Das Mengenverhältnis zwischen Metallocen-Verbindung und Cokatalysator beträgt dann 1 bis 100.000 mol Cokatalysator pro mol Metallocen.

Cokatalysatoren sind beispielsweise Aluminoxanverbindungen. Darunter werden solche der Formel 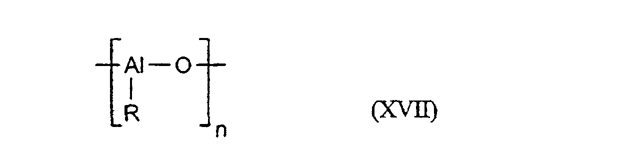 verstanden, in der
- R: für C₁-C₂₀-Alkyl, C₆-C₁₂-Aryl oder Benzyl steht und
- n: eine Zahl von 2 bis 50, bevorzugt 10 bis 35 bedeutet.

Es ist ebenso möglich, ein Gemisch verschiedener Aluminoxane oder ein Gemisch von deren Vorläufern (Aluminiumalkyle oder Alkylaluminiumhalogenide) in Kombination mit Wasser (in gasförmiger, flüssiger, fester oder gebundener Form, etwa als Kristallwasser) einzusetzen. Das Wasser kann auch als (Rest)Feuchte des Polymerisationsmediums, des Monomers oder eines Trägers zugeführt werden.

Die aus der eckigen Klammer von Formel (XVII) herausragenden Bindungen enthalten als Endgruppen des oligomeren Aluminoxans R-Gruppen oder AlR₂-Gruppen. Solche Aluminoxane liegen in der Regel als Gemisch mehrerer von ihnen mit unterschiedlicher Kettenlänge vor. Die Feinuntersuchung hat auch Aluminoxane mit ringförmiger oder käfigartiger Struktur ergeben. Aluminoxane sind marktgängige Verbindungen. Im speziellen Fall von R = CH₃ wird von Methylaluminoxanen (MAO) gesprochen.

Weitere Co-Katalysatoren c) sind voluminöse nicht- oder schwach-kooridinierende Anionen. Die Aktivierung durch solche voluminösen Anionen gelingt beispielsweise durch Umsetzung der D/A-Metallocene mit Tris-(pentafluorphenyl)-boran, Triphenylboran, Triphenylaluminium, Trityl-tetrakis-(pentafluorphenyl)-borat oder N,N-Dialkylphenyl-ammonium-tetrakis-(pentafluorphenyl)-borat oder den entsprechenden Phosphonium- oder Sulfoniumsalzen von Boraten oder (Erd)Alkali-, Thallium- oder Silbersalzen von Boraten, Carboranen, Tosylaten, Triflaten, Perfluorcarboxylaten, wie Trifluoracetat oder den korrespondierenden Säuren. Vorzugsweise werden dabei D/A-Metallocene eingesetzt, deren Anionäquivalente X = Alkyl-, Aryl- oder Benzylgruppen darstellt. Solche Derivate können auch "in situ" hergestellt werden, indem man D/A-Metallocene mit anderen Anionäquivalenten, wie X = F, Cl, Br, OR, NR₂ etc. zuvor mit Aluminiumalkylen, Lithiumorganylen oder Grignard-Verbindungen oder Zinkoder Bleialkylen umsetzt. Die daraus erhältlichen Umsetzungsprodukte können ohne vorherige Isolierung mit obengenannten Boranen oder Boraten aktiviert werden.

Weitere Cokatalysatoren c) sind Aluminiumalkyle, Alkylaluminiumhalogenide, Lithiumalkyle oder Mg-organische Verbindungen, wie Grignard-Verbindungen oder teilhydrolysierte Bororganyle.

Unter Alkyl werden sämtliche dem Fachmann bekannte lineare oder verzweigte Alkylreste mit 1 bis 12 C-Atomen verstanden, wie Methyl, Ethyl, n-Propyl, i-Propyl, n-Butyl, i-Butyl, t-Butyl, n-Pentyl, i-Pentyl, neo-Pentyl, Hexyl, Heptyl Oktyl und Iso-Oktyl, wobei die Alkylketten durch eine oder meherer Heteroatome, insbesondere Sauerstoff, unterbrochen sein können.

Beispiele für bevorzugte,Aluminiumalkyle sind Aluminiumtrialkyl, wie Aluminiumtrimethyl, Aluminumtriethyl, Triisobutylaluminium, Triisooctylaluminium

Beispiele für Alkylaluminiumhalogenide sind Diethylaluminiumchlorid, Ethylaluminiumdichlorid, Ethylaluminiumsesquichlorid.

Bevorzugte Cokatalysatoren sind Aluminium- und Lithiumalkyle.

Die Aktivierung mit dem Cokatalysator c), bzw. die Erzeugung des voluminösen nichtoder schwach-kooridinierenden Anions kann in dem Autoklaven oder in einem getrennten Reaktionsgefäß (Präformierung) durchgeführt werden. Die Aktivierung kann in Gegenwart oder Abwesenheit des/der zu polymerisierenden Monomeren erfolgen. Die Aktivierung kann in einem aliphatischen oder aromatischen oder halogenierten Lösungs- oder Suspensionsmittel oder auf der Oberfläche eines Katalysator-Trägermaterials durchgeführt werden.

Der Cokatalysator/ die Cokatalysatoren c) können sowohl als solche in homogener Form als auch einzeln oder gemeinsam in heterogener Form auf Trägem eingesetzt werden. Das Trägermaterial kann hierbei anorganischer oder organischer Natur sein, wie Kieselgel, Al₂O₃, MgCl₂, Cellulosederivate, Stärke und Polymere, oder auch die Komponente b).

Trägermaterialien werden vorzugsweise thermisch und/oder chemisch vorbehandelt um den Wassergehalt bzw. die OH-Gruppenkonzentration definiert einzustellen oder möglichst niedrig zu halten. Eine chemische Vorbehandlung kann z.B. in der Umsetzung des Trägers mit Aluminiumalkyl bestehen. Anorganische Träger werden gewöhnlich vor Verwendung auf 100°C bis 1000°C während 1 bis 100 Stunden erhitzt. Die Oberfläche solcher anorganischer Träger, insbesondere von Silica (SiO₂), liegt zwischen 10 und 1000 m²/g, vorzugsweise zwischen 100 und 800 m²/g. Der Teilchendurchmesser liegt zwischen 0,1 und 500 Mikrometer (µ), vorzugsweise zwischen 10 und 200 µ.

Durch Homo- oder Copolymerisation umzusetzende Olefine, i-Olefine, Cycloolefine, Alkine und Diolefine sind beispielsweise Ethylen, Propylen, Buten-1, i-Buten, Penten-1, Hexen-1, Octen-1, 3-Methyl-buten-1, 4-Methyl-penten-1-, 4-Methyl-hexen-1, 1,3-Butadien, Isopren, 1,4-Hexadien, 1,5-Hexadien und 1,6-Octadien, Methyloctadien, Vinyl-cyclohexan, Vinyl-cyclohexen, Chloropren, Acetylen, Methylacetylen. Mit α,ω-Diolefinen kann weiterhin eine cyclisierende Polymerisation durchgeführt werden, bei der beispielsweise aus 1,5-Hexadien Poly-(methylen-1,3-cyclopentan) gebildet wird:

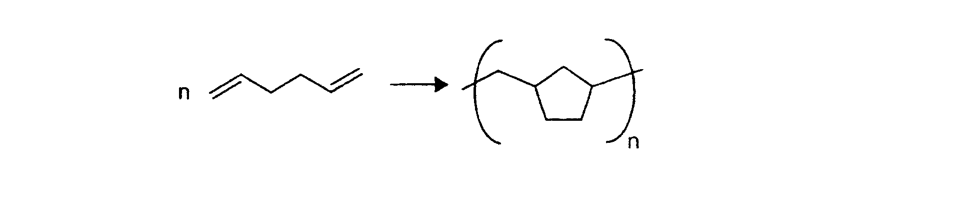

Benutzt man hierbei Trialkylsilyl-substituierte α,ω-Diolefine, kann nachträglich durch polymeranaloge Umsetzung eine funktionelle Gruppe eingeführt werden.

Die Olefine und Diolefine können weiterhin substituiert sein, beispielsweise mit Phenyl, substituiertem Phenyl, Halogen, der veresterten Carboxylgruppe, der Säureanhydridgruppe; Verbindungen dieser Art sind beispielsweise Styrol, Methylstyrol, Chlorstyrol, Fluorstyrol, Inden, 4-Vinyl-biphenyl, Vinyl-fluoren, Vinyl-anthracen, Methylmethacrylat, Ethylacrylat, Vinylsilan, Trimethylallylsilan, Vinylchlorid, Vinylidenchlorid, Tetrafluorethylen, Isobutylen, Vinylcarbazol, Vinylpyrrolidon, Acrylnitril, Vinylether und Vinylester.

Weiterhin sind erfindungsgemäß ringöffnende Polyadditionen, etwa von Lactonen, wie ε-Caprolacton oder δ-Valerotacton, oder von Lactamen, wie ε-Caprolactam, möglich.

Einsetzbare Cycloolefine sind in den Anmeldungen WO-98/01483 und WO-98/01484 beschrieben.

Bevorzugte Monomere sind: Ethylen, Propylen, Buten, Hexen, Octen, 1,5-Hexadien, 1,6-Octadien, Cycloolefine, Methylmethacrylat, ε-Caprolacton, δ-Valerolacton und Acetylen. Es ist möglich, die genannten (Co)Polymerisationen in Gegenwart von Wasserstoff, etwa zur Molmassen-Einstellung, durchzuführen.

Die mit den erfindungsgemäßen geträgerten Katalysatoren mit einer Donor-Akzeptor Wechselwirkung durchzuführenden Homo- oder Copolymerisationen oder Polyadditionen werden im Bereich der angegebenen Temperaturen und Drücke adiabatisch oder isotherm durchgeführt. Es handelt sich dabei um Hochdruckverfahren in Autoklaven oder Rohrreaktoren, um Lösungsverfahren als auch um Polymerisation in Masse, um Verfahren in der Slurry-Phase in Rührreaktoren oder Schlaufenreaktoren sowie um Verfahren in der Gas-Phase, wobei die Drücke für die Slurry-, Lösungs- und Gas-Phase nicht über 65 bar hinausgehen. Solche Polymerisationen können auch in Gegenwart von Wasserstoff durchgeführt werden. Alle diese Verfahren sind lange bekannt und dem Fachmann geläufig.

Die erfindungsgemäßen geträgerten Katalysatoren mit einer Donor-Akzeptor Wechselwirkung ermöglichen durch die Donor-Akzeptor-Brücke eine definierte Öffnung der beiden Cyclopentadienylgerüste, bzw. der beiden Liganden in der Art eines Schnabels, wobei neben einer hohen Aktivität eine hohe Stereoselektivität, eine kontrollierte Molekulargewichtsverteilung und ein einheitlicher Einbau von Comonomeren gewährleistet sind. Infolge einer definierten schnabelartigen Öffnung ist auch Platz für voluminöse Comonomere. Eine hohe Einheitlichkeit in der Molekulargewichtsverteilung ergibt sich weiterhin aus dem einheitlichen und definierten Ort der durch Einschub (Insertion) erfolgenden Polymerisation (Single Site Catalyst).

Die D/A-Struktur kann eine Extra-Stabilisierung der Katalysatoren bis hin zu hohen Temperaturen bewirken, so daß die Katalysatoren auch im Hochtemperaturbereich von 80 bis 250°C, bevorzugt 80 bis 180°C eingesetzt werden können. Die mögliche thermische Dissoziation der Donor-Akzeptor-Bindung ist reversibel und führt durch diesen Selbstorganisations-Prozeß und Selbstreparatur-Mechanismus zu besonders hochwertigen Katalysatoreigenschaften. Die thermische Dissoziation ermöglicht z.B. eine gezielte Verbreiterung der Molekulargewichts-Verteilung, wodurch die Polymere besser verarbeitbar werden. Dieser Effekt kommt z.B. auch bei solchen Katalysatoren zum Tragen, bei denen die Liganden, z.B. CpI und CpII, durch je eine kovalente und eine D/A-Brücke verknüpft sind. Die erfindungsgemäßen D/A-Metallocenstrukturen ermöglichen z.B. ein mit klassischen Katalysatoren nicht erreichtes Ausmaß an defektfreier Polyethylenbildung. Entsprechend können die Ethen-Polymerisate außerordentlich hohe Schmelztemperaturen beispielsweise oberhalb von 135°C bis 160°C (Maximum der DSC-Kurve) aufweisen. Solche linearen Polyethylene, die direkt im Polymerisationsprozeß anfallen und Schmelztemperaturen von 140 bis 160°C (Maxima der DSC-Kurven), bevorzugt 142 bis 160°C, besonders bevorzugt 144 bis 160°C aufweisen, sind neu. Solche neuen hochschmelzenden Polyethylene zeigen gegeben-über den bekannten beispielsweise verbesserte mechanische Eigenschaften und Wärmeformbeständigkeit (Sterilisierbarkeit bei medizinischen Anwendungen) und eröffnen dadurch Anwendungsmöglichkeiten, die bisher für Polyethylen nicht möglich erschienen und beispielsweise bisher nur durch hochtaktisches Polypropylen erfüllbar waren. Weitere Merkmale sind hohe Schmelzenthalpien und hohe PE-Molmassen.

In einem weiten Temperaturbereich wird durch Polymerisations-Temperaturerhöhung zwar die PE-Molmasse erniedrigt, jedoch ohne nennenswerte Aktivitätsminderung und ohne daß insgesamt der Bereich technisch interessanter hoher PE-Molmassen und hoher PE-Schmelztemperaturen verlassen wird.

Es wurde weiterhin beobachtet, daß erfindungsgemäße geträgerte Katalysatoren mit einer Donor-Akzeptor Wechselwirkung geeigneter Symmetrie an geeigneten Monomeren eine regiospezifische (isotaktische, syndiotaktische) Polymerisation bewirken, jedoch im oberen Teil des genannten Temperaturbereichs am gleichen Monomer eine zunehmend unspezifische (ataktische) Verknüpfung der Monomereinheiten auslösen. Diese Erscheinung ist noch nicht vollständig untersucht, könnte jedoch in Übereinstimmung mit der Beobachtung stehen, daß koordinative Bindungen, die von einer ionischen Bindung überlagert sind, wie die Donor-Akzeptor-Bindungen in den erfindungsgemäßen Metallocen-Verbindungen, eine zunehmende Reversibilität bei höherer Temperatur zeigen. So wurde beispielsweise bei der Ethylen-Propylen-Copolymerisation beobachtet, daß bei gleichem Angebot beider Comonomerer bei tiefer Polymerisationstemperatur ein hoch Propylen-haltiges Copolymer gebildet wird, während mit steigender Polymerisationstemperatur der Propylengehalt zurückgeht, bis schließlich bei hoher Temperatur überwiegend Ethylen enthaltende Polymere entstehen.

Die reversible Dissoziation und Assoziation der D/A-Struktur und die dadurch möglich werdende gegeneinander erfolgende Rotation der Liganden, beispielsweise der Cp-Gerüste, kann schematisch wie folgt dargestellt werden:

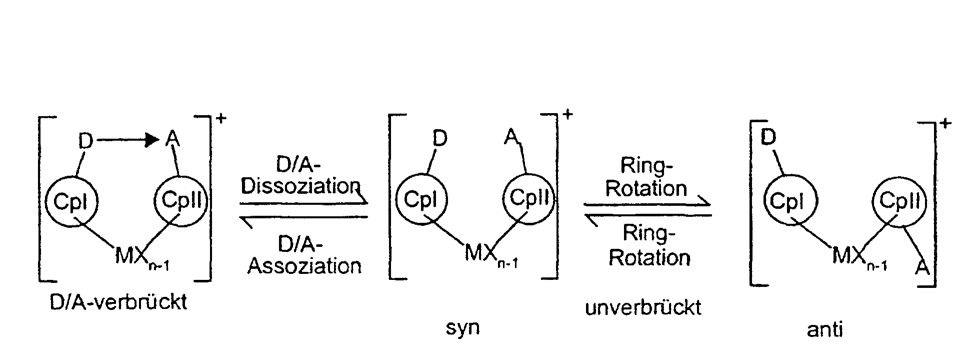

Eine weitere wertvolle Eigenschaft der erfindungsgemäßen geträgerten Katalysatoren mit einer Donor-Akzeptor Wechselwirkung besteht in der Möglichkeit zur Selbstaktivierung und damit einem Verzicht auf teure Cokatalysatoren, insbesondere im Falle von dianionischen 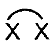 -Derivaten. Hierbei bindet das Akzeptoratom A in der geöffneten Form der D/A-Metallocen-Verbindung einen X-Liganden, beispielsweise eine Seite eines Dianions unter Ausbildung einer zwitterionischen Struktur und erzeugt damit beim Übergangsmetall eine positive Ladung, während das Akzeptoratom A eine negative Ladung annimmt. Eine solche Selbstaktivierung kann intramolekular oder intermolekular erfolgen. Dies sei am Beispiel der bevorzugten Verknüpfung zweier X-Liganden zu einem Chelat-Liganden, nämlich des Butadiendiyl-Derivates, verdeutlicht:

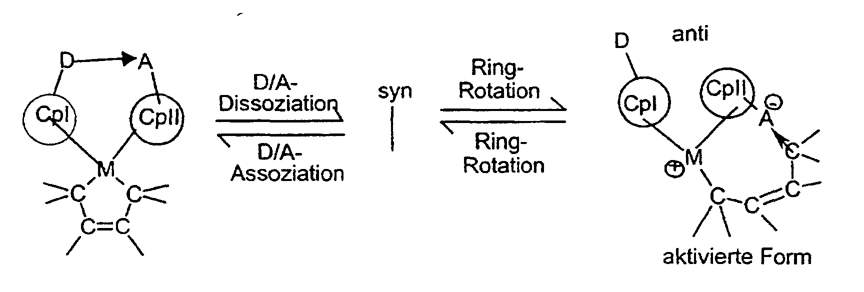

Die Bindungsstelle zwischen dem Übergangsmetall M und H oder substituiertem oder nicht substituiertem C, etwa dem noch gebundenen C des im Formelbeispiel gezeigten Butadiendiyl-Dianions ist sodann der Ort für die Olefin-Insertion zur Polymerisation.

Weiterhin sind die erfindungsgemäß einzusetzenden geträgerten Katalysatoren mit einer Donor-Akzeptor Wechselwirkung geeignet zur Herstellung sowohl thermoplastischer als auch elastomerer Polymerisate nach den verschiedenen, oben genannten Herstellungsverfahren, wobei sowohl hochkristalline Polymere mit optimiertem Schmelzbereich als auch amorphe Polymere mit optimierter Glastemperatur zugänglich sind.

Die herstellbaren Polymerisate eigenen sich vorzüglich zur Herstellung von Formkörpem aller Art, insbesondere Folien, Schläuche, Profile, Scheiben, optischen Datenspeicher-Medien, Kabelummantelungen und Extrudaten.

Die nachfolgenden Beispiele verdeutlichen die Erfindung, sollen aber keinesfalls als Einschränkung betrachtet werden.

### Beispiele

### Beispiel 1 Ethylen-Polymerisation

In einen ausgeheizten, sauerstofffreien 300 ml V4A-Stahlautoklaven wurden über eine Schleuse 1,25 g Montmorillonit (Fluko AG Buchs) mit einer Oberfläche von 200 ± 20 m²/g, welches bei 200°C im Argon-Strom während 2 Stunden getrocknet worden war, unter Argon eingefüllt.

Mittels einer Spritze wurden 1,5 mmol Triisobutylaluminium (TIBA) als 1-molare Lösung in Toluol injiziert und 1 Stunde bei Raumtemperatur mittels Magnetkern gerührt.

Anschließend wurden 0,5 µmol D/A-Metallocen [(cp)MePhPBCl₂(cp)ZrCl₂] in 2 ml Toluol injiziert und eine weitere Stunde gerührt. Danach wurden 100 ml über Natrium-getrocknetes Toluol in den Autoklaven überführt, der Autoklav auf 45°C temperiert, 10 bar Ethylen aufgedrückt und bei konstantem Druck 30 Minuten polymerisiert. Die Temperatur des Autoklaven stieg von 45 auf 54°C durch exotherme Reaktion. Der Autoklav wurde entspannt und der Autoklaven-Inhalt in 1 1 Ethanol ausgerührt, der Feststoff abgesaugt, mit Ethanol gewaschen und bis zur Gewichtskonstanz bei 80°C im Vakuumtrockenschrank getrocknet. Die Katalysatoraktivität betrug 26,0 t PE/mol Zr x h. Zur Bestimmung der analytischen Daten wurde das Polyethylen in o-Dichlorbenzol unter Schutzgas bei 120°C gelöst, das anorganische Material durch Filtration abgetrennt und das Polymerisat in Ethanol ausgefällt und wie oben beschrieben isoliert. Die Grenzviskosität η in o-Dichlorbenzol bei 140°C betrug 4,15 dl/g, entsprechend einer mittleren Molmasse Mᵥ = 402 kg/mol. Die DSC-Messung in der 2. Aufheizung ergab eine Schmelztemperatur Tₘ = 133°C mit einer Schmelzenthalpie Hₘ = 140 J/g.

### Beispiel 2 Propylen-Polymerisation

In einen ausgeheizten, sauerstofffreien 300 ml V4A-Stahlautoklaven wurden über eine Schleuse 1,25 g Montmorillonit mit einer Oberfläche von 200 ± 20 m²/g, welches bei 200°C im Argon-Strom während 2 Stunden getrocknet worden war, unter Argon eingefüllt.

Mittels einer Spritze wurden 1,5 mmol Triisobutylaluminium (TIBA) als 1-molare Lösung in Toluol injiziert und 1 Stunde bei Raumtemperatur mittels Magnetkern gerührt.

Anschließend wurden 0,5 µmol D/A-Metallocen [(cp)MePhPBCl₂(cp)ZrCl₂] in 2 ml Toluol injiziert und eine weitere Stunde gerührt. Es wurde ca. 1 mol propen in den Autoklaven einkondensiert, auf 30°C temperiert und 30 Minuten polymerisiert. Die Innentemperatur stieg durch exotherme Reaktion von 30 auf 41°C, der Autoklav wurde entspannt, das gebildete Polymerisat in Toluol gelöst und durch Filtration von anorganischem Material abgetrennt. Die toluolische Polymerisationslösung wurde in 1 1 Ethanol ausgefällt, mit Ethanol gewaschen und das Polymerisat durch Filtration isoliert und im Vakuumtrockenschrank bei 80°C bis zur Gewichtskonstanz getrocknet. Die Katalysatoraktivität betrug 17,2 t PP/mol Zr x h. Die Grenzviskosität η in o-Dichlorbenzol bei 140°C betrug 0,79 dl/g. Die DSC-Messung in der 2. Aufheizung zeigte eine Glasstufe T_{g} bei -3°C und eine Schmelzenthalpie Hₘ = 1 J/g.

| | | | |
|---|---|---|---|
| NMR-Spektroskopie | Isotaktizitätsindex | II | 57 % |
| | Triadenanalyse | mm | 30 % |
| | | mr/rm | 54 % |
| | | rr | 16 % |

### Beispiel 3 Ethylen-Propylen-ENB-Terpolymerisation

In einen ausgeheizten, sauerstofffreien 300 ml V4A-Stahlautoklaven wurden über eine Schleuse 1,25 g Montmorillonit mit einer Oberfläche von 200 ± 20 m²/g, welches bei 200°C im Argon-Strom während 2 Stunden getrocknet worden war, unter Argon eingefüllt.

Mittels einer Spritze wurden 1,5 mmol Triisobutylaluminium (TIBA) als 1-molare Lösung in Toluol injiziert und 1 Stunde bei Raumtemperatur mittels Magnetkern gerührt.

Anschließend wurden 0,5 µmol D/A-Metallocen [(cp)Me₂PBCl₂(cp)ZrCl₂] in 2 ml Toluol injiziert und eine weitere Stunde gerührt. Danach wurden 100 ml über Natrium getrocknetes toluol und 1 g 5-Ethyliden-2-Norbornen (ENB) in den Autoklaven überführt. Nach Temperierung auf 45°C wurden über eine Stahlschleuse 10 g propen eingedrückt und mit Ethylen der sich einstellende Innendruck um 4 bar von ca. 3 auf 7 bar erhöht. Nach 30-minütiger Polymerisation wurde der Autoklav entspannt, der Autoklaven-Inhalt mit Toluol verdünnt, über ein 50 µm-Filtertuch filtriert, das Filtrat in 1 l Ethanol ausgefällt und das Polymerisat durch Filtration isoliert, mit Ethanol gewaschen und im Vakuumtrockenschrank bis zur Gewichtskonstanz bei 80°C getrocknet. Die Katalysatoraktivität betrug 16,8 t EPDM/mol Zr x h. Die Grenzviskosität η in o-Dichlorbenzol bei 140°C betrug 1,19 dl/g. Die DSC-Messung in der 2. Aufheizung ergab eine Glasübergangstemperatur T_{g} = -45°C, eine Einfriertemperatur Tₑ = -49°C und eine Schmelzenthalpie Hₘ = 28 J/g. IR-spektroskopisch ermittelte Zusammensetzung des EPDM-Kautschuks:

| | |
|---|---|
| Ethen | 61 Gew.-% |
| Propen | 31 Gew.-% |
| ENB | 8 Gew.-% |

### Beispiel 4 Ethylen-Propylen-ENB Terpolymerisation

Es wurde wie in Beispiel 3 vefahren, wobei jedoch als D/A-Metallocen [(cp)Et₂PBCl₂(cp)ZrCl₂] eingesetzt wurde.

Die Innentemperatur des Autoklaven stieg während der Polymerisation von 45° auf 48°C. Die Katalysatoraktivität lag bei ca. 13 Tonnen EPDM pro mol Zr und Stunde. Der amorphe Kautschuk hatte eine Grenzviskosität η in ortho-Dichlorbenzol bei 140°C von ca. 1 dl/g. Die DSC-Messung in der 2. Aufheizung ergab eine Glasübergangstemperatur T_{g} = -51°C.
IR-spektroskopisch ermittelte Zusammensetzung des EPDM-Kautschuks:

| | |
|---|---|
| Ethen | 55 Gew.-% |
| Propen | 39 Gew.-% |
| ENB | 6 Gew.-% |

### Beispiel 5 Propylen-Polymerisation

Es wurde wie in Beispiel 2 verfahren, wobei als D/A-Metallocen *rac*-[2-Me-ind)Et₂PBCl₂(2-Me-ind)ZrCl₂] eingesetzt wurde und das Montmorillonit bei 200°C während 5 Stunden bei 6 x 10⁻³ mbar getrocknet war. In Gegenwart von Propylen wurde auf ca. 40°C temperiert. Das gebildete Polypropylen hatte eine Grenzviskosität η in ortho-dichlorbenzol bei 140°C von 2,13 dl/g. Die DSC-Messung in der 2. Aufheizung zeigte einen Glasübergang bei -6°C und ein Schmelzmaximum bei 151°C.

### Beispiel 6 Ethylen-Propylen-ENB Terpolymerisation

Es wurde wie in Beispiel 3 verfahren, wobei jedoch 1 µmol D/A-Metallocen auf 2 g Montmorillonit mit 3 mmol Triisobutylaluminium eingesetzt wurde. Die Katalysatoraktivität betrug ca. 12 Tonnen EPDM pro mol Zr und Stunde. η (ODCB), 140°C) = 1,1 dl/g
Tg (DSC, 2. Aufheizung) = -48°C

| | | |
|---|---|---|
| IR | Ethen | 57 Gew.-% |
| | Propen | 35 Gew.-% |
| | ENB | 8 Gew.-% |

### Vergleichsbeispiel Ethylen-Propylen-ENB Terpolymerisation

Es wurde wie in Beispiel 6 verfahren, wobei jedoch als Trägermaterial Silicagel (Grace Typ 332) anstelle von Montmorillonit eingesetzt worden war, welches zuvor bei 200°C 2 Stunden im Argonstrom getrocknet war. die Katalysatoraktivität betrug nur 0,4 Tonnen gebildetes Polymer pro mol Zr und Stunde.

### Beispiel 7 Katalysator-Herstellung

Alle Reaktionen wurden unter streng anaeroben Bedingungen und unter Verwendung von Schlenk-Techniken bzw. der Hochvakuumtechnik durchgeführt. Die verwendeten Lösungsmittel waren trocken und mit Argon gesättigt. Chemische Verschiebungen δ sind in ppm angegeben, relativ zum jeweiligen Standard: ¹H(Tetramethylsilan), ¹¹B(Bortrifluorid-Etherat), ¹³C(Tetramethylsilan), ³¹P(85 %ige Phosphorsäure). Negative vorzeichen bedeuten eine Verschiebung zu höherem Feld.

### (Dimethylphosphino-dichlorboranyl)-verbrücktes Bis(cyclopentadienyl)-zirconiumdichlorid [(cp)Me₂PBCl₂(cp)ZrCl₂]

In einem Schlenkkolben wurde 0,1 mol Trimethylsilyl-cyclopentadien (Fluka) mit 700 ml trockenem Diethylether verdünnt und auf -20°C abgekühlt. Zu dieser Lösung wurden 0,1 mol Butyl-Lithium (2,5 molar in Hexan) tropfenweise zugegeben und die entstehende Suspension bei Raumtemperatur noch 2 Stunden gerührt. Anschließend wurde bei 0°C 0,1 mol Dimethylchlorphosphan in 50 ml Diethylether zugetropft un die Reaktionsmischung bei Raumtemperatur über Nacht gerührt, das Lösungsmittel im Vakuum entfernt und dann der Rückstand in 200 ml Hexan aufgenommen. Nach Filtration wurde das Lösungsmittel im Vakuum entfernt und der silylierte Donor-Ligand Me₂P(cp)SiMe₃ bei 10⁻² Torr umkondensiert.

Eine Lösung von 0,07 mol des silylierten Donor-Liganden in 100 ml Toluol wurde während ca. 3 Stunden zu einer auf 0°C gekühlten Suspension von 0,07 mol Zirkontetrachlorid in 200 ml Toluol getropft und die gelbe Suspension über Nacht bei Raumtemperatur nachgerührt. Der schwerlösliche gelbe D-Halbsandwich-Komplex wurde durch Filtration isoliert, mit Toluol gewaschen und im Vakuum (10⁻³ Torr) getrocknet und mit silyliertem Akzeptor-Liganden zum D/A-Metallocen umgesetzt. Dazu wurde 0,01 mol des D-Halbsandwich-Komplexes in 200 ml Toluol resuspendiert und bei 0°C der silylierte Akzeptor-Ligand BCl₂(cp)SiMe₃ in 40 ml Toluol langsam zugetropft.

Nach Weiterreaktion über Nacht bei Raumtemperatur wurde filtriert, das Filtrat im Vakuum bis zur beginnenden Trübung eingeengt und im Tiefkühlschrank auskristallisiert. Durch Umkristallisieren aus Toluol wurde das D/A-Metallocen in Form feiner Nadeln für die Röntgenstrukturanalyse gewonnen.

### Röntgenstrukturanalyse von 1:

d(PB) = 198,25 (13) pm
d(Zentroid cppZr) = 221,5 pm
d(Zr-cp_{B}Zentroid) = 219,2 pm
Winkel (Zentroid-Zr-Zentroid) = 127,9°
Winkel (Cl-Zr-Cl) = 96.562 (12)°
³¹P {¹H}NMR (162 MHz, CD₂Cl₂)δ = -7,7 (m)
11B {¹H} NMR (128 MHz, CD₂Cl₂)δ = -0,1 (d,¹J³¹P¹¹B = 120 Hz)
¹³C {¹H} NMR (101 MHz, CD₂Cl₂)δ = +8,7 (d, , ¹J³¹P¹³C = 41 Hz, CH₃), +104,1 (d, ¹J³¹P¹³C = 66 Hz, Cₚ-α)+ 119,4 (s, C_{B}-β), +120,2 (d, ²J³¹P¹³C = 8 Hz, C_{P}-β), +123,2 (d, ³J³¹P¹³C = 7 Hz, C_{P}-γ), +125,7 (s, C_{B}-y).
¹H NMR (400 MHz, CD₂Cl₂) δ = +1,94 (d, ²J³¹P¹H = 12,0 Hz, CH₃), +6,56 (m, C_{B}-βH), +6,74 (pseudo-q, 3 Hz, C_{P}-γH), +6,79 (pseudo-t, 3 Hz, C_{B}-γH), +7,01 (pseudo-q, 3 Hz, C_{P}-βH). Die Zuordnung erfolgte aufgrund der 2D NMR-Spektoren ¹H NOESY, ¹H¹³C HMQC, ¹H¹³C HMBC.

### Beispiel 8 Ethylen-Hexen-Copolymerisation

In einen ausgeheizten, sauerstofffreien 300 ml V4A-Autoklaven werden über eine Druckschleuse 0,75 g Montmorillonit (K10) mit einer Oberfläche von 200 ± 20 m²/g, welches bei 200°C im Argonstrom während 2 Stunden getrocknet worden war, unter Argon eingefüllt.

Mittels einer Spritze wurden 0,75 mmol Triisobutylaluminium (TIBA) als 1-molare Lösung in Toluol injiziert (0,75 ml) und 1 Stunde bei Raumtemperatur mittels Magnetkern gerührt.

Anschließend wurden 0,25 µmol D/A-Metallocen [(cp)Et₂pPBCl₂(cp)ZrCl₂] in 0,5 ml Toluol injiziertund eine weitere Stunde gerührt. Danach wurden 100 g (148,6 ml) trockenes, Argon-gesättigtes Hexen (1) in den Autoklaven überführt und die Mischung auf 40°C erwärmt und ein Ethendruck von 10 bar eingestellt.

Die Innentemperatur stieg von 40°C auf 44°C. Nach 30-minütiger Polymerisation wurde der Autoklav entspannt, der klare, viskose Autoklaveninhalt mit Toluol verdünnt, filtriert und das Copolymer in 1 1 Ethanol ausgefällt, durch Filtration isoliert, mit Ethanol gewaschen und im Vakuum-Trockenschrank bei 80°C bis zur Gewichtskonstanz getrocknet.
Ausbeute: 5 g
Katalysator-Aktivität: 40 t Copolymer pro mol Zr und Stunde
Copolymer-Zusammensetzung (NMR):
58,4 Gew.-%, 31,8 Mol-% Hexen
41,6 Gew.-%, 68,2 Mol-% Ethen
Grenzviskosität in o-Dichlorbenzol bei 140°C: 1,22 dl/g

| | |
|---|---|
| DSC (2. Aufheizung) | Einfriertemperatur Te = -67°C |
| | Glastemperatur Tg = -65°C |

## Patentansprüche

1. Katalysatorsystem enthaltend
a) eine Übergangsmetallverbindung mit mindestens einer Donor-Akzeptor-Wechselwirkung
b) ein ionenaustauschendes Trägermaterial mit Schichtgitteraufbau und gegebenenfalls
c) einen oder mehrere Co-Katalysatoren.

2. Katalysatorsystem gemäß Anspruch 1, **dadurch gekennzeichnet, daß** man als ionentauschendes Trägermaterial Montmorillonit oder ein Montmorillonit enthaltendes Gemisch einsetzt.

3. Katalysatorsystem gemäß einem der Ansprüche 1 oder 2, **dadurch gekennzeichnet, daß** man als Cokatalysator ein Alumoxan verwendet.

4. Katalysatorsystem gemäß Anspruch 3, **dadurch gekennzeichnet, daß** man als Alumoxan Methylalumoxan (MAO) einsetzt.

5. Katalysatorsystem gemäß einem oder mehreren der Ansprüche 1 bis 2, **dadurch gekennzeichnet, daß** man als Cokatalysator ein Aluminiumalkyl oder ein Lithiumalkyl einsetzt.

6. Katalysatorsystem gemäß Anspruch 5, **dadurch gekennzeichnet, daß** man als Aluminiumalkyl Trimethylaluminium, Triethylaluminium, Tri(n-propyl)aluminium, Dibutylaluminiumhydrid, Triisobutylaluminium, Tri(n-butyl)aluminium, Tri(n-hexyl)aluminium, Tri(n-octyl)aluminium oder Triisooctylaluminium einsetzt.

7. Verfahren zur Polymerisation von α-Olefinen, i-Olefinen, Cycloolefinen, Alkenen und/oder Diolefinen, **dadurch gekennzeichnet, daß** eine Zusammensetzung gemäß einem oder mehreren der Ansprüche 1 bis 6 eingesetzt wird.

8. Polymerisate herstellbar in einem Verfahren gemäß Anspruch 7.

9. Verwendung der Polymerisate gemäß Anspruch 8 zur Herstellung von Formkörpern aller Art.

## Claims

1. Catalyst system containing
a) a transition metal compound with at least one donor-acceptor interaction
b) an ion-exchanging support material with a layer lattice structure and optionally
c) one or more co-catalysts.

2. Catalyst system according to claim 1, **characterised in that** montmorillonite or a montmorillonite-containing mixture is used as ion-exchanging support material.

3. Catalyst system according to either claim 1 or 2, **characterised in that** an alumoxane is used as co-catalyst.

4. Catalyst system according to claim 3, **characterised in that** methyl alumoxane (MAO) is used as alumoxane.

5. Catalyst system according to one or more of claims 1 to 2, **characterised in that** an aluminium alkyl or a lithium alkyl is used as co-catalyst.

6. Catalyst system according to claim 5, **characterised in that** trimethyl aluminium, triethyl aluminium, tri(n-propyl) aluminium, dibutyl aluminium hydride, triisobutyl aluminium, tri(n-butyl) aluminium, tri(n-hexyl) aluminium, tri(n-octyl) aluminium or triisooctyl aluminium is used as aluminium alkyl.

7. Process for the polymerisation of α-olefins, i-olefins, cycloolefins, alkenes and/or diolefins, **characterised in that** a composition according to one or more of claims 1 to 6 is used.

8. Polymers that can be produced in a process according to claim 7.

9. Use of the polymers according to claim 8 for producing all types of mouldings.

## Revendications

1. Système catalytique comprenant
a) un composé de métal de transition avec au moins une interaction donneur-accepteur
b) un matériau support échangeur d'ions avec une structure de réseau en couche et éventuellement
c) un ou plusieurs co-catalyseurs.

2. Système catalytique selon la revendication 1, **caractérisé en ce que** ledit matériau support échangeur d'ions est la montmorillonite ou un mélange contenant de la montmorillonite.

3. Système catalytique selon l'une des revendications 1 ou 2, **caractérisé en ce qu'**on utilise comme co-catalyseur un alumoxane.

4. Système catalytique selon la revendication 3, **caractérisé en ce qu'**on utilise comme alumoxane le méthylalumoxane (MAO).

5. Système catalytique selon l'une ou plusieurs des revendications 1 à 2, **caractérisé en ce qu'**on utilise comme co-catalyseur un alkylaluminium ou un alkyllithium.

6. Système catalytique selon la revendication 5, **caractérisé en ce qu'**on utilise comme alkylaluminium le triméthylaluminium, le triéthylaluminium, le tri(n-propyl)aluminium, l'hydrure de dibutylaluminium, le triisobutylaluminium, le tri(n-butyl)aluminium, le tri(n-hexyl)aluminium, le tri(n-octyl)aluminium ou le triisooctylaluminium.

7. Procédé de polymérisation d'α-oléfines, de i-oléfines, de cyclooléfines, d'alcènes et/ou de dioléfines, **caractérisé en ce qu'**on utilise une composition selon l'une ou plusieurs des revendications 1 à 6.

8. Polymérisat susceptible d'être obtenu par un procédé selon la revendication 7.

9. Utilisation du polymérisat selon la revendication 8 pour la préparation de corps moulés de toutes sortes.
